# EUROPÄISCHE PATENTSCHRIFT

(11) **EP 2 425 695 B1**
(45) Veröffentlichungstag und Bekanntmachung des Hinweises auf die Patenterteilung: **12.06.2013**
(21) Anmeldenummer: 11005477.2
(22) Anmeldetag: 05.07.2011
(51) Int. Cl.: A01B 3/24, A01B 3/46

(54) **Aufsattelbares Bodenbearbeitungsgerät mit zugkraftverstärkender Hydraulik**
Soil cultivation device with hydraulics for increasing traction force
Appareil de travail du sol pouvant être remorqué et doté d'un système hydraulique en vue de renforcer la traction

(30) Priorität: 01.09.2010 DE 102010036067
(43) Veröffentlichungstag der Anmeldung: 07.03.2012
(73) Patentinhaber: Köckerling GmbH & Co. KG, 33415 Verl (DE)
(72) Erfinder: Dreesbeimdieke, Hermann, Dipl.-Ing., 33334 Gütersloh (DE)
(74) Vertreter: Weber, Joachim

(56) Entgegenhaltungen:
- DE-A1- 1 920 899
- DE-B- 1 222 303
- US-A- 3 235 286
- US-A- 3 246 700
- US-A- 3 583 494

## Beschreibung

Die vorliegende Erfindung betrifft ein aufsattelbares Bodenbearbeitungsgerät mit zugkraftverstärkender Hydraulik.

Es werden drei verschiedene Arten zur Anbindung eines Bodenbearbeitungsgerätes an eine Zugmaschine unterschieden: (i) Ein angebautes Gerät verfügt über keinerlei Transportabstützung und wird vollständig von der Zugmaschine getragen. Während des Einsatzes des angebauten Gerätes stützt es sich selbstverständlich über Bodenbearbeitungselemente, wie beispielsweise Pflugscharen, ab. Die Verbindung zwischen einem Dreipunktturm und dem Bodenbearbeitungsgerät ist hier entweder starr ausgeführt oder kann um eine horizontale Achse verschwenkt werden. Vertikale Drehachsen, wie sie zum Rangieren beispielsweise bei angehängten oder aufgesattelten Geräten nötig sind, sind hier nicht vorgesehen. (ii) Angehängte Bodenbearbeitungsgeräte stehen vollständig auf eigenen Rädern, wobei nur die Auflast der Deichsel von der Zugmaschine getragen wird. (iii) Aufgesattelt ist ein Gerät, das sich zum Teil auf eigenen Rädern abstützt und zum anderen Teil auf dem Zugfahrzeug aufliegt, vergleichbar mit einem LKW-Sattelschlepper. Hierzu wird oft die Anbindung des Bodenbearbeitungsgerätes an einen Oberlenker und zwei Unterlenker der Zugmaschine gewählt.

US 3235286 A zeigt ein Bodenbearbeitungsgerät nach dem Oberbegriff des Anspruchs 1.

Bei Zugmaschinen, Schleppern und Traktoren ist stets eine hohe Zugkraft wünschenswert. In der Regel erreicht man dies durch eine hohe Traktion an der Hinterachse der Zugmaschine.

Es ist Aufgabe vorliegender Erfindung, ein aufsattelbares Bodenbearbeitungsgerät bereitzustellen, welches bei kostengünstiger Herstellung und modularem Aufbau, zugkraftverstärkend auf die Zugmaschine wirkt.

Diese Aufgabe wird gelöst durch die Merkmale des unabhängigen Anspruches. Die abhängigen Ansprüche haben vorteilhafte Ausgestaltungen der Erfindung zum Inhalt.

Die Erfindung zeigt ein aufsattelbares Bodenbearbeitungsgerät mit zugkraftverstärkender Hydraulik. Das Bodenbearbeitungsgerät umfasst hierzu ein

Fahrwerk und eine Deichsel. Bevorzugt ist die Deichsel mit einem Rahmen des Bodenbearbeitungsgeräts verbunden. An diesem Rahmen sind sowohl die Bodenbearbeitungselemente sowie das Fahrwerk angeordnet. Ferner umfasst das Bodenbearbeitungsgerät einen über ein erstes Gelenk mit der Deichsel verbundenen Dreipunktturm, wobei das erste Gelenk zwischen Dreipunktturm und Deichsel zwei rotatorische Freiheitsgrade umfasst. Ferner ist ein Hydraulikzylinder als hydraulischer Oberlenker vorgesehen, der mit einem Ende am Dreipunktturm angreift und mit dem anderen Ende zur Anbindung an eine Zugmaschine ausgebildet ist. Zur Anbindung an den Unterlenker der Zugmaschine sind am Dreipunktturm zwei Unterlenkeraufnahmen ausgebildet. Diagonal zwischen dem Dreipunktturm und der Deichsel befindet sich eine Pendelstütze. Diese Pendelstütze ist zumindest zur Übertragung von Zugkräften ausgebildet. Durch eine Kontraktion des Hydraulikzylinders wird der Dreipunktturm in Richtung der Zugmaschine auf Zug belastet. Über die Pendelstütze überträgt sich diese Kraft auf die Deichsel. Dadurch entsteht eine höhere Achslast an der Hinterachse der Zugmaschine, wodurch sich letztendlich die Traktion an den Hinterrädern der Zugmaschine erhöht.

In bevorzugter Ausführung ist vorgesehen, dass eine erste Rotationsachse des ersten Gelenks horizontal und senkrecht zur Zugrichtung angeordnet ist, und dass eine zweite Rotationsachse des ersten Gelenks vertikal angeordnet ist. Mittels der zweiten Rotationsachse kann das Bodenbearbeitungsgerät in einer horizontalen Ebene verschwenkt werden. Dies erleichtert insbesondere bei sehr langen Bodenbearbeitungsgeräten die Kurvenfahrt und das Rangieren. Um die erste Rotationsachse kann das Bodenbearbeitungsgerät angehoben werden bzw. kann nach oben schwenken, um große Bodenunebenheiten auszugleichen.

Ferner bevorzugt ist es, dass das erste Ende der Pendelstütze mittels einem zweiten Gelenk, insbesondere Kugelgelenk, mit zwei rotatorischen Freiheitsgraden befestigt ist. Das zweite Ende der Pendelstütze ist bevorzugt starr angebunden oder es ist mittels einer Linearführungsvorrichtung mit einem linearen Freiheitsgrad befestigt. Die Verbindung zwischen Dreipunktturm und Pendelstütze befindet sich bevorzugt beabstandet und oberhalb des ersten Gelenks. Die Verbindung zwischen Pendelstütze und Deichsel befindet sich bevorzugt beabstandet und hinter dem ersten Gelenk. Die beiden rotatorischen Freiheitsgrade des zweiten Gelenks ermöglichen ein Verschwenken des Bodenbearbeitungsgerätes sowohl in der horizontalen Ebene als auch ein leichtes Verschwenken in der vertikalen Ebene. Die Linearführungsvorrichtung erlaubt einerseits die Übertragung von Zugkräften und ermöglicht bei Druckkräften eine lineare Verschiebbarkeit in gewissem Rahmen. Insbesondere wenn das Bodenbearbeitungsgerät über große Bodenunebenheiten oder Steine fährt, kann es nötig sein, dass sich das Gerät in der vertikalen Ebene anhebt bzw. um das erste Gelenk verschwenkt wird. Dies ermöglicht die Linearführungsvorrichtung. Insbesondere ist hierzu die Pendelstütze mit einem Bolzen quer zur Pendelstütze ausgeführt, wobei der Bolzen in einem oder zwei parallelen Langlöchern der Linearführungsvorrichtung geführt ist.

In besonders bevorzugter Ausführung ist vorgesehen, dass zwischen Dreipunktturm und Pendelstütze das zweite Gelenk, und zwischen Deichsel und Pendelstütze die starre Anbindung oder die Linearführungsvorrichtung angeordnet ist.

Des Weiteren sieht die Erfindung vor, dass der Hydraulikzylinder doppeltwirkend ausgeführt ist. Unter doppeltwirkend ist hier zu verstehen, dass beide Hydraulikkammern, also beidseitig des Kolbens, einen Anschluss für Hydraulikleitungen aufweisen. Letztendlich müssen aber nicht beide Kammern mit Druck beaufschlagt werden, sondern es kann eine Kammer auch mit dem Tank in Verbindung stehen.

Besonders bevorzugt ist vorgesehen, dass der Hydraulikzylinder, unabhängig von seiner Länge, stets mit dem gleichen Druck beaufschlagt wird. Generell ist der Druck natürlich einstellbar und muss je nach Größe des Bodenbearbeitungsgerätes, Bodenbeschaffenheit, Zugmaschine usw., eingestellt werden. Der eingestellte Druck bleibt jedoch unabhängig von dem Kontraktionszustand des Hydraulikzylinders konstant. Erfindungsgemäß wird dies durch ein Druckbegrenzungsventil erreicht. Das Druckbegrenzungsventil ist zwischen der druckbeaufschlagten ersten Hydraulikkammer des Hydraulikzylinders und der zweiten Hydraulikkammer des Hydraulikzylinders und/oder einem Tank angeordnet ist. Das Druckbegrenzungsventil ist insbesondere einstellbar, steuerbar oder regelbar. Unter der druckbeaufschlagten ersten Hydraulikkammer ist diejenige zu verstehen, welche für das Kontrahieren des Hydraulikzylinders zuständig ist. Bei der Verwendung eines regulären Differentialzylinders ist dies die Ringkammer. Das Druckbegrenzungsventil kann außen auf dem Hydraulikzylinder aufsitzen, zwischen zwei Hydraulikleitungen angeordnet sein oder aber im Kolben des Hydraulikzylinders angeordnet sein.

Insbesondere ist vorgesehen, dass das Druckbegrenzungsventil ausschließlich zur Druckbegrenzung in dem Hydraulikzylinder dient. Innerhalb der Hydraulik der Zugmaschine sind selbstverständlich auch Druckbegrenzungsventile vorgesehen. Allerdings ist das erfindungsgemäß verwendete Druckbegrenzungsventil bevorzugt außerhalb der Zugmaschinenhydraulik angeordnet und begrenzt lediglich den Druck in dem Hydraulikzylinder, welcher als Oberlenker dient. Insbesondere ist hierzu das Druckbegrenzungsventil am Bodenbearbeitungsgerät, insbesondere am oder auf dem Hydraulikzylinder, montiert. Alternativ ist das Druckbegrenzungsventil im Hydraulikzylinder, insbesondere im Kolben des Hydraulikzylinders, integriert.

Bevorzugt ist der Hydraulikzylinder zur Verbindung mit dem Hydraulikkreislauf der Zugmaschine ausgebildet. Der Hydraulikkreislauf der Zugmaschine ist im Regelfall ein offener Hydraulikkreislauf.

Die erfindungsgemäße Zugkraftverstärkung funktioniert am besten, wenn im Hydraulikzylinder, unabhängig von seiner aktuellen Länge, stets derselbe Druck vorliegt. Zu diesem Zweck wird, insbesondere zwischen den beiden Anschlüssen des Hydraulikzylinders, ein Druckbegrenzungsventil eingebaut. Während der Verwendung des aufgesattelten Bodenbearbeitungsgeräts wird die Zugmaschinenhydraulik auf den Hydraulikzylinder aufgeschalten, so dass immer ein Ölfluss auf die erste Hydraulikkammer, insbesondere Ringseite, wirkt. Dadurch zieht sich der Hydraulikzylinder zusammen und verkürzt somit den Abstand zwischen der zugmaschinenseitigen Oberlenkeraufnahme und dem Dreipunktturm. Folglich verlagert sich der Schwerpunkt, und die Traktion an der Hinterachse der Zugmaschine wird erhöht.

Damit bei diesem Vorgang die Kraft regelbar ist, und somit bei kleinen Schleppern oder kleinen Geräten auch eine kleinere Kraft am Hydraulikzylinder einstellbar ist, kann der Druck und somit die Zugkraft des Hydraulikzylinders am Druckbegrenzungsventil eingestellt, geregelt oder gesteuert werden. Moderne Zugmaschinen verfügen über die Möglichkeit, die Ölstrommenge einzustellen. Bevorzugt reicht für die erfindungsgemäße Anordnung ein Ölfluss von 0,1 bis 0,2 l/min aus.

Wirkt eine sehr starke Nickbewegung des Schleppers oder des Gerätes auf den Hydraulikzylinder, die größer ist, als seine durch den Ölfluss hervorgerufene Kraft, dann zieht sich der Zylinder auseinander und das Öl wird aus der ersten Hydraulikkammer (Ringkammer) verdrängt. Die entsprechende Fehlmenge wird über die Zugmaschinenhydraulik nachgefüllt.

Die stete Beaufschlagung des Hydraulikzylinders mit der Zugmaschinenhydraulik sowie das Vorsehen eines Druckbegrenzungsventils haben entscheidende Vorteile gegenüber der Verwendung eines Druckspeichers zur Beaufschlagung des Hydraulikzylinders. Bei Verwendung eines Druckspeichers weist der Hydraulikzylinder an jedem Längenpunkt eine andere Kraft auf, solange das System geschlossen ist. Infolgedessen verändert sich stets die vom Hydraulikzylinder initiierte Zugkraft, abhängig davon, in welcher Stellung der Zylinder sich gerade befindet. Erfindungsgemäß wird dies durch die Verwendung des Druckbegrenzungsventils und die stetige Verbindung zur Zugmaschinenhydraulik vermieden.

Im Folgenden wird die Erfindung anhand eines Ausführungsbeispiels genauer erläutert. Hierzu zeigt:
- Fig. 1: ein Bodenbearbeitungsgerät mit zugkraftverstärkender Hydraulik nach einem Ausführungsbeispiel, aufgesattelt auf eine Zugmaschine,
- Fig. 2: eine Detailansicht auf Fig. 1, und
- Fig. 3: den Hydraulikkreislauf des aufgesattelten Bodenbearbeitungsgeräts gemäß dem Ausführungsbeispiel.

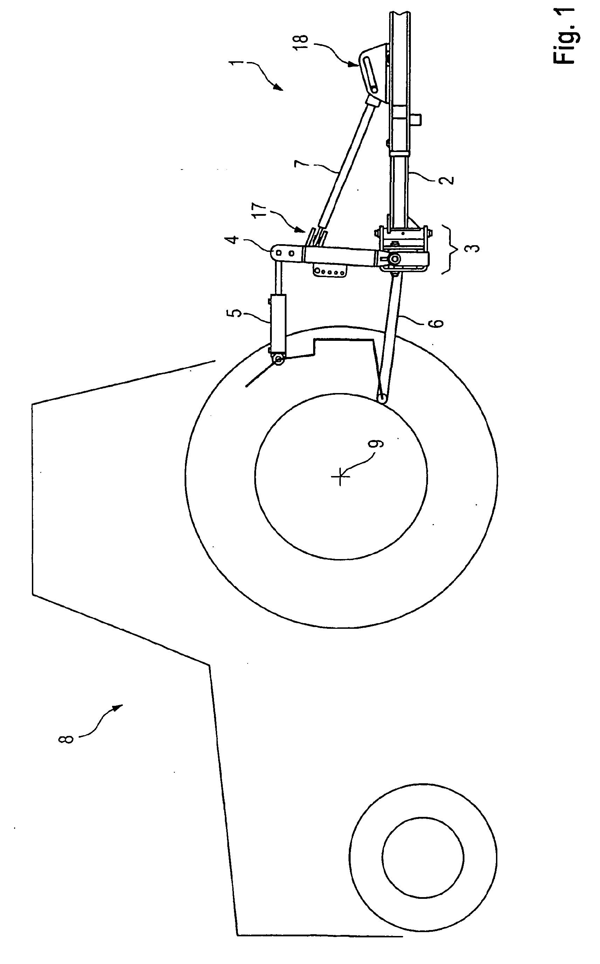

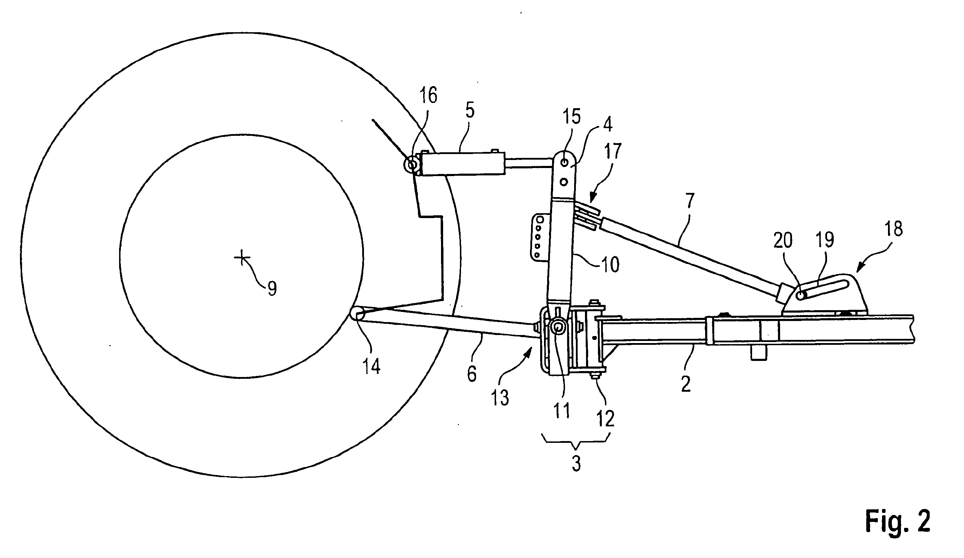

Die Fig. 1 bis 3 zeigen ein Ausführungsbeispiel der Erfindung. Fig. 1 zeigt das erfindungsgemäße Bodenbearbeitungsgerät 1, aufgesattelt auf einer Zugmaschine 8, insbesondere Schlepper oder Traktor. Fig. 2 zeigt die Verbindung zwischen Zugmaschine 8 und Bodenbearbeitungsgerät 1 im Detail.

Wesentliche Bauteile des erfindungsgemäßen Bodenbearbeitungsgeräts 1 sind eine Deichsel 2, ein erstes Gelenk 3, ein Dreipunktturm 4, ein Hydraulikzylinder 5 als hydraulischer Oberlenker und eine Pendelstütze 7. Das erste Gelenk 3 verbindet die Deichsel 2 mit dem Dreipunktturm 4. Die Pendelstütze 7 steht diagonal zwischen dem Dreipunktturm 4 und der Deichsel 2. Der Hydraulikzylinder 5 ist anstelle eines üblichen Oberlenkers angeordnet und verbindet ein oberes Ende des Dreipunktturms 4 mit der Zugmaschine 8. Zur weiteren Verbindung zwischen Dreipunktturm 4 und Zugmaschine 8 sind zwei Unterlenker 6 angeordnet.

Durch eine Druckbeaufschlagung des Hydraulikzylinders 5 verkürzt sich der hydraulische Oberlenker und es erhöht sich die Belastung auf einer Hinterachse 9 der Zugmaschine 8. Dadurch erhöht sich die Traktion an den Hinterrädern der Zugmaschine 8.

Das Bodenbearbeitungsgerät 1 umfasst des Weiteren einen Rahmen, ein Fahrwerk und Bodenbearbeitungselemente (nicht dargestellt). Der Rahmen ist mit der Deichsel 2 verbunden und trägt sowohl das Fahrwerk des Bodenbearbeitungsgeräts als auch die Bodenbearbeitungselemente.

Fig. 2 zeigt ein Detail aus Fig. 1. Der Dreipunktturm 4 umfasst einen stehenden Dreipunktturmanteil 10. Dieser ist im Wesentlichen vertikal ausgerichtet. Am unteren Ende des Dreipunktturms 4 befindet sich das erste Gelenk 3. Das erste Gelenk 3 weist eine erste Rotationsachse 11 und eine zweite Rotationsachse 12 auf. Die erste Rotationsachse 11 ist horizontal und senkrecht zur Zugrichtung der Zugmaschine 8 ausgerichtet. Die zweite Rotationsachse 12 steht senkrecht zur ersten Rotationsachse 11 und ist vertikal ausgerichtet. Des Weiteren befinden sich am unteren Ende des Dreipunktturms 4 geräteseitige Unterlenkeraufnahmen 13. An der Zugmaschine befinden sich zwei zugmaschinenseitige Unterlenkeraufnahmen 14. Zwischen diesen Aufnahmen 13, 14 sind die beiden Unterlenker 6 angeordnet. Am oberen Ende des stehenden Dreipunktturmanteils 10 befindet sich eine geräteseitige Oberlenkeraufnahme 15. In etwa auf gleicher Höhe befindet sich an der Zugmaschine 8 eine zugmaschinenseitige Oberlenkeraufnahme 16. Zwischen der geräteseitigen und der zugmaschinenseitigen Oberlenkeraufnahme 15, 16 ist der Oberlenker, ausgebildet als Hydraulikzylinder 5, angeordnet. Zur Anbindung der Pendelstütze 7 an dem Dreipunktturm 4 ist ein zweites Gelenk 17 vorgesehen. Das zweite Gelenk 17 ist als Kugelgelenk ausgebildet. Das zweite Gelenk 17 befindet sich zwischen der geräteseitigen Oberlenkeraufnahme 15 und dem ersten Gelenk 3. Zur Verbindung zwischen Deichsel 2 und Pendelstütze 7 ist eine Linearführungsvorrichtung 18 vorgesehen. Die Linearführungsvorrichtung 18 umfasst zwei parallele Platten. In diesen parallelen Platten sind zwei deckungsgleiche Langlöcher 19 vorgesehen. In der Pendelstütze 7 befindet sich ein Bolzen 20 senkrecht zur Pendelstütze 7. Dieser Bolzen 20 ist in den Langlöchern 19 geführt. Somit ergibt sich hier ein linearer Freiheitsgrad in Richtung der Langlöcher 19.

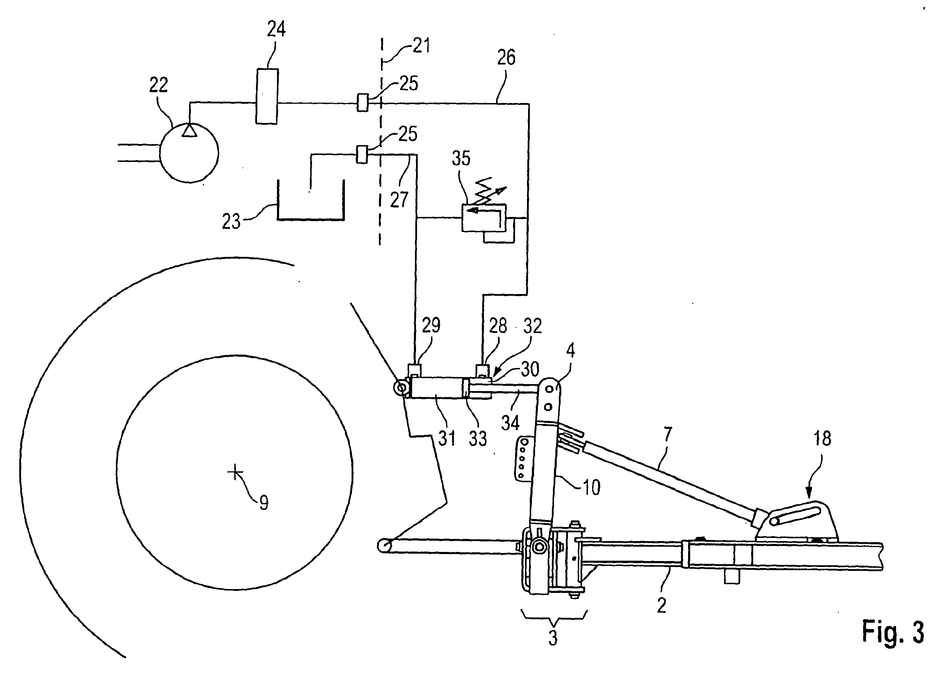

Fig. 3 zeigt die Hydraulik zur Zugkraftverstärkung an der Hinterachse 9 der Zugmaschine 8. Die Zugmaschinenhydraulik umfasst eine Hydraulikpumpe 22, welche Hydraulikdruck über eine Hydraulikleitung zu einem Ventilblock 24 liefert. Des Weiteren umfasst die Zugmaschinenhydraulik einen Tank 23. Zur Anbindung der Hydraulik des erfindungsgemäßen Bodenbearbeitungsgeräts 1 umfasst die Zugmaschinenhydraulik Hydraulikkupplungen 25, einerseits zum Anschluss an den Ventilblock 24 und andererseits zum Anschluss an den Tank 23. Die beiden Hydraulikkupplungen 25 stellen die Systemgrenze 21 zwischen der Hydraulik der Zugmaschine 8 und der Hydraulik des Bodenbearbeitungsgeräts 1 dar.

Der Hydraulikzylinder 5 des Bodenbearbeitungsgeräts 1 umfasst einen Zylinder 32. In diesem Zylinder 32 ist ein Kolben 33 geführt. Der Kolben 33 ist verbunden mit einer Kolbenstange 34. Der Zylinder 32 ist verbunden mit der zugmaschinenseitigen Oberlenkeraufnahme 16. Die Kolbenstange 34 ist verbunden mit der geräteseitigen Oberlenkeraufnahme 15. Der Kolben 33 teilt den Zylinder 32 in eine druckbeaufschlagte erste Hydraulikkammer 30 und eine zweite Hydraulikkammer 31 auf. Die erste Hydraulikkammer wird auch als Ringkammer bezeichnet, da die Kolbenstange 34 durch die erste Hydraulikkammer 30 hindurchgeht. Zur Verbindung mit Hydraulikleitungen ist an der ersten Hydraulikkammer 30 ein erster Anschluss 28 vorgesehen. An der zweiten Hydraulikkammer 31 befindet sich ein zweiter Anschluss 29. Zur Druckbeaufschlagung des Hydraulikzylinders 5 ist die erste Hydraulikkammer 30 über den ersten Anschluss 28 mit der druckführenden Hydraulikkupplung 25 verbunden. Die zweite Hydraulikkammer 31 ist über den Anschluss 29 mit der tankseitigen Hydraulikkupplung 25 verbunden. Zwischen der Hydraulikkupplung 25 und der ersten Hydraulikkammer 30 befindet sich eine Druckleitung 26. Zwischen der zweiten Hydraulikkammer 31 und dem Tank 23 der Zugmaschinenhydraulik befindet sich eine Tankleitung 27.

Des Weiteren ist die erste Hydraulikkammer 30 über ein Druckbegrenzungsventil 35 mit der zweiten Hydraulikkammer 31 verbunden. Das Druckbegrenzungsventil 35 ist einstellbar, steuerbar oder regelbar. Bei einem Überdruck in der ersten Hydraulikkammer 30 bzw. in der Druckleitung 26 öffnet das Druckbegrenzungsventil 35 und lässt Druck ab zur zweiten Hydraulikkammer 31 bzw. zur Tankleitung 27 oder direkt zum Tank 23. Das Druckbegrenzungsventil 35 kann an drei verschiedenen Stellen angeordnet sein. Es kann zwischen der Druckleitung 26 und der Tankleitung 27 oder zwischen dem ersten Anschluss 28 und dem zweiten Anschluss 29 oder direkt im Kolben 33 angeordnet sein.

Das Druckbegrenzungsventil 35 wird je nach gewünschter Zugkraft, abhängig von der Zugmaschine 8, dem Bodenbearbeitungsgerät 1 und der Bodenbeschaffung, eingestellt. Durch stetige Druckbeaufschlagung über die Pumpe 22 herrscht stets ein gleicher Druck in der ersten Hydraulikkammer 30 und somit, unabhängig von der jeweiligen Stellung des Kolbens 33, eine konstante Kraft. Dadurch entsteht eine sehr konstante und gut steuerbare Zugkraftverstärkung auf der Hinterachse 9 der Zugmaschine 8.

### Bezugszeichenliste

- 1: Bodenbearbeitungsgerät
- 2: Deichsel
- 3: erstes Gelenk
- 4: Dreipunktturm
- 5: hydraulischer Oberlenker/Hydraulikzylinder
- 6: Unterlenker
- 7: Pendelstütze
- 8: Zugmaschine
- 9: Hinterachse
- 10: Dreipunktturmanteil
- 11: erste Rotationsachse
- 12: zweite Rotationsachse
- 13: geräteseitige Unterlenkeraufnahme
- 14: zugmaschinenseitige Unterlenkeraufnahme
- 15: geräteseitige Oberlenkeraufnahme
- 16: zugmaschinenseitige Oberlenkeraufnahme
- 17: zweites Gelenk/Kugelgelenk
- 18: Linearführungsvorrichtung
- 19: Langlöcher
- 20: Bolzen
- 21: Systemgrenze
- 22: Hydraulikpumpe
- 23: Tank
- 24: Ventilblock
- 25: Hydraulikkupplungen
- 26: Druckleitung
- 27: Tankleitung
- 28: erster Anschluss
- 29: zweiter Anschluss
- 30: erste druckbeaufschlagte Hydraulikkammer
- 31: zweite Hydraulikkammer
- 32: Zylinder
- 33: Kolben
- 34: Kolbenstange
- 35: Druckbegrenzungsventil

## Patentansprüche

1. Aufsattelbares Bodenbearbeitungsgerät (1) mit zugkraftverstärkender Hydraulik mit:
- einem Fahrwerk,
- einer Deichsel (2),
- einem über ein erstes Gelenk (3) mit der Deichsel (2) verbundenen Dreipunktturm (4), wobei das erste Gelenk (3) zwischen Dreipunktturm (4) und Deichsel (2) zwei rotatorische Freiheitsgrade umfasst,
- zwei zur Anbindung an Unterlenker (6) der Zugmaschine (8) ausgebildete Unterlenkeraufnahmen (13) am Dreipunktturm (4), und
- einer Pendelstütze (7) diagonal zwischen dem Dreipunktturm (4) und der Deichsel (2), **gekennzeichnet durch**
- einen Hydraulikzylinder (5) als hydraulischen Oberlenker der mit einem Ende am Dreipunktturm (4) angreift und mit dem anderen Ende zur Anbindung an eine Zugmaschine (8) ausgebildet ist,
- wobei der Hydraulikzylinder (5) doppelwirkend ausgeführt ist, und wobei zwischen der druckbeaufschlagten ersten Hydraulikkammer (30) des Hydraulikzylinders (5) und der zweiten Hydraulikkammer (31) des Hydraulikzylinders (5) oder einem Tank (23) ein Druckbegrenzungsventil (35), insbesondere ein einstellbares oder regelbares Druckbegrenzungsventil, angeordnet ist.

2. Aufsattelbares Bodenbearbeitungsgerät nach Anspruch 1, **dadurch gekennzeichnet, dass** eine erste Rotationsachse (11) des ersten Gelenks (3) horizontal und senkrecht zur Zugrichtung angeordnet ist, und dass eine zweite Rotationsachse (12) des ersten Gelenks (3) vertikal angeordnet ist.

3. Aufsattelbares Bodenbearbeitungsgerät nach einem der vorhergehenden Ansprüche, **dadurch gekennzeichnet, dass** das erste Ende der Pendelstütze (7) mittels einem zweiten Gelenk (17) mit zwei rotatorischen Freiheitsgraden befestigt ist.

4. Aufsattelbares Bodenbearbeitungsgerät nach Anspruch 3, **dadurch gekennzeichnet, dass** das zweite Ende der Pendelstütze (7) starr angebunden ist, oder dass das zweite Ende der Pendelstütze mittels einer Linearführungsvorrichtung (18) mit einem linearen Freiheitsgrad befestigt ist.

5. Aufsattelbares Bodenbearbeitungsgerät nach den Ansprüchen 3 und 4, **dadurch gekennzeichnet, dass** zwischen Dreipunktturm (4) und Pendelstütze (7) das zweite Gelenk (17) und zwischen Deichsel (2) und Pendelstütze (7) die starre Anbindung oder die Linearführungsvorrichtung (18) angeordnet ist.

6. Aufsattelbares Bodenbearbeitungsgerät nach einem der vorhergehenden Ansprüche, **dadurch gekennzeichnet, dass** das Druckbegrenzungsventil (35) ausschließlich zur Druckbegrenzung in dem Hydraulikzylinder (5) dient.

7. Aufsattelbares Bodenbearbeitungsgerät nach einem der vorhergehenden Ansprüche, **dadurch gekennzeichnet, dass** das Druckbegrenzungsventil (35) am Bodenbearbeitungsgerät (1), insbesondere am Hydraulikzylinder (5), montiert ist oder im Hydraulikzylinder (5) integriert ist.

8. Aufsattelbares Bodenbearbeitungsgerät nach einem der vorhergehenden Ansprüche, **dadurch gekennzeichnet, dass** der Hydraulikzylinder (5) zur Verbindung mit einem Hydraulikkreislauf, insbesondere offenen Hydraulikkreislauf, der Zugmaschine (8) ausgebildet ist.

## Claims

1. A semi-mountable soil cultivation device with hydraulics for increasing traction force, comprising:
- a chassis,
- a shaft (2),
- a three-point tower (4) connected via a first joint (3) to the shaft (2), the first joint (3) having two rotatory degrees of freedom between three-point tower (4) and shaft (2),
- two lower-link receiving means (13) on the three-point tower (4) configured for connection to lower links (6) of the traction engine (8), and
- a pendulum support (7) diagonally between the three-point tower (4) and the shaft (2), **characterized by**
- a hydraulic cylinder (5) as hydraulic upper link which with one end acts on the three-point tower (4) and is configured with the other end for connection to a traction engine (8),
- wherein the hydraulic cylinder (5) is of a double-action type, and wherein a pressure relief valve (35), particularly an adjustable or controllable pressure relief valve, is arranged between the pressurized first hydraulic chamber (30) of the hydraulic cylinder (5) and the second hydraulic chamber (31) of the hydraulic cylinder (5) or a tank (23).

2. The semi-mountable soil cultivation device according to claim 1, **characterized in that** a first rotation axis (11) of the first joint (3) is arranged to be horizontal and perpendicular to the traction direction, and that a second rotation axis (12) of the first joint (3) is vertically arranged.

3. The semi-mountable soil cultivation device according to any of the preceding claims, **characterized in that** the first end of the pendulum support (7) is fastened by means of a second joint (17) with two rotatory degrees of freedom.

4. The semi-mountable soil cultivation device according to claim 3, **characterized in that** the second end of the pendulum support (7) is rigidly connected, or that the second end of the pendulum support is fastened by means of a linear guide device (18) with a linear degree of freedom.

5. The semi-mountable soil cultivation device according to claims 3 and 4, **characterized in that** the second joint (17) is arranged between three-point tower (4) and pendulum support (7) and the rigid connection or the linear guide device (18) is arranged between shaft (2) and pendulum support (7).

6. The semi-mountable soil cultivation device according to any of the preceding claims, **characterized in that** the pressure relief valve (35) exclusively serves pressure relief control in the hydraulic cylinder (5).

7. The semi-mountable soil cultivation device according to any of the preceding claims, **characterized in that** the pressure relief valve (35) is mounted on the soil cultivation device (1), particularly on the hydraulic cylinder (5), or is integrated in the hydraulic cylinder (5).

8. The semi-mountable soil cultivation device according to any of the preceding claims, **characterized in that** the hydraulic cylinder (5) is configured for connection with a hydraulic circuit, particularly open hydraulic circuit, of the traction engine (8).

## Revendications

1. Appareil de travail du sol (1) pouvant être remorqué comprenant un système hydraulique renforçant la force de traction doté :
- d'un train de roulement,
- d'un timon (2),
- d'une potence à trois points (4) reliée au timon (2) par l'intermédiaire d'une première articulation (3), sachant que la première articulation (3) comprend entre la potence à trois points (4) et le timon (2) deux degrés de liberté de rotation,
- de deux logements de bras inférieur d'attelage (13) sur la potence à trois points (4), réalisés pour être attachés au bras inférieur d'attelage (6) du véhicule tracteur (8), et
- d'un support oscillant (7) situé de manière diagonale entre la potence à trois points (4) et le timon (2), **caractérisé par**
- d'un cylindre hydraulique (5) sous la forme d'un bras supérieur d'attelage hydraulique, dont une extrémité vient en prise au niveau de la potence à trois points (4) et dont l'autre extrémité est réalisée pour être attachée à un véhicule tracteur (8),
- dans lequel le cylindre hydraulique (5) est réalisé de manière à présenter une double action, et dans lequel une soupape de limitation de pression (35), en particulier une soupape de limitation de pression ajustable ou régulable, est disposée entre la première chambre hydraulique (30), exposée à l'action de la pression, du cylindre hydraulique (5) et la deuxième chambre hydraulique (31) du cylindre hydraulique (5) ou un réservoir (23).

2. Appareil de travail du sol pouvant être remorqué selon la revendication 1, **caractérisé en ce qu'**un premier axe de rotation (11) de la première articulation (3) est disposé de manière horizontale et de manière perpendiculaire par rapport à la direction de traction, et **en ce qu'**un deuxième axe de rotation (12) de la première articulation (3) est disposé de manière verticale.

3. Appareil de travail du sol selon l'une quelconque des revendications précédentes, **caractérisé en ce que** la première extrémité du support oscillant (7) est fixée au moyen d'une deuxième articulation (17) avec deux degrés de liberté de rotation.

4. Appareil de travail du sol pouvant être remorqué selon la revendication 3, **caractérisé en ce que** la deuxième extrémité du support oscillant (7) est reliée de manière rigide, ou **en ce que** la deuxième extrémité du support oscillant est fixée au moyen d'un dispositif de guidage linéaire (18) avec un degré de liberté linéaire.

5. Appareil de travail du sol pouvant être remorqué selon les revendications 3 et 4, **caractérisé en ce que** la deuxième articulation (17) est disposée entre la potence à trois points (4) et le support oscillant (7), et **en ce que** le système d'attache rigide ou le dispositif de guidage linéaire (18) est disposé entre le timon (2) et le support oscillant (7).

6. Appareil de travail du sol pouvant être remorqué selon l'une quelconque des revendications précédentes, **caractérisé en ce que** la soupape de limitation de pression (35) sert exclusivement à la limitation de pression dans le cylindre hydraulique (5).

7. Appareil de travail du sol pouvant être remorqué selon l'une quelconque des revendications précédentes, **caractérisé en ce que** la soupape de limitation de pression (35) est montée sur l'appareil de travail du sol (1), en particulier sur le cylindre hydraulique (5) ou dans le cylindre hydraulique (5).

8. Appareil de travail du sol pouvant être remorqué selon l'une quelconque des revendications précédentes, **caractérisé en ce que** le cylindre hydraulique (5) est réalisé pour être assemblé à un circuit hydraulique, en particulier un circuit hydraulique ouvert, du véhicule tracteur (8).
